# EUROPÄISCHE PATENTSCHRIFT

(11) **EP 0 953 743 B1**
(45) Veröffentlichungstag und Bekanntmachung des Hinweises auf die Patenterteilung: **12.03.2003**
(21) Anmeldenummer: 99107068.1
(22) Anmeldetag: 10.04.1999
(51) Int. Cl.: F02B 37/007, F02B 37/18, F02B 29/04, F02B 37/04, F02B 37/12, F02D 21/08

(54) **Abgasturbolader**
Turbocharger
Turbo compresseur de suralimentation

(30) Priorität: 02.05.1998 DE 19819699
(43) Veröffentlichungstag der Anmeldung: 03.11.1999
(73) Patentinhaber: DaimlerChrysler AG, 70567 Stuttgart (DE)
(72) Erfinder: Daudel, Helmut, 73614 Schorndorf (DE); Finger, Helmut, 70771 Leinfelden-Echterdingen (DE); Sumser, Siegfried, 70184 Stuttgart (DE)

(56) Entgegenhaltungen:
- DE-A- 4 320 045
- DE-C- 4 231 218
- US-A- 5 406 796
- US-A- 5 611 202
- US-A- 5 740 786
- PATENT ABSTRACTS OF JAPAN vol. 1995, no. 07, 31. August 1995 (1995-08-31) & JP 07 091325 A (JIDOSHA BUHIN KOGYO KK;OTHERS: 01), 4. April 1995 (1995-04-04)

## Beschreibung

Die Erfindung betrifft einen mit einem Abgasturbolader ausgestatteten Motor mit interner Verbrennung, mit den Merkmalen des Oberbegriffes des Anspruches 1.

Ein aufgeladener Motor dieser Art ist beispielsweise aus der US 5 611 202 bekannt und umfasst eine Abgasrückführung mit einer Abgasrückführungsleitung, ein Steuergerät und einen Abgasturbolader, der einen Hauptverdichter zum Verdichten von dem Motor zugeführter Frischluft, einen Zusatzverdichter zum Verdichten von dem Motor rückzuführenden Verbrennungsabgasen und eine Turbine aufweist, die von den Abgasen des Motors antreibbar ist und die zum Antrieb des Hauptverdichters und des Zusatzverdichters dient. Die Abgasrückführungsleitung leitet die dem Motor rückzuführenden Abgase dem Zusatzverdichter zu, während eine Ladeluftleitung die im Hauptverdichter verdichtete Luft dem Motor zuführt.

Von besonderer Bedeutung ist hierbei, dass die zum Antrieb des Hauptverdichters und des Zusatzverdichters verwendete Turbine als Varioturbine ausgebildet ist, die eine variable Geometrie aufweist. Dabei können vorzugsweise ein verstellbares Leitgitter, drehbare Leitschaufeln, axial verschiebliche Leitgitterringe oder Klappen im Turbinenbereich od.dgl. zur Variierung der Durchströmungsgeometrie der Turbine verwendet werden. Die Verwendung einer solchen Varioturbine in einem Abgasturbolader, der einen Zusatzverdichter für die Abgasrückführung aufweist, ermöglicht die Beeinflussung der Abgasrückführung über eine Veränderung des Aufstaudruckes in den Abgasen vor der Turbine. Dabei bewirkt eine solche Veränderung des Aufstaudruckes vor der Turbine zum einen eine direkte Beeinflussung der Abgasrückführungsrate und zum anderen eine Veränderung der Turbinenleistung und dadurch eine Veränderung des im Hauptverdichter und im Zusatzverdichter erzielbaren Ladedruckes und somit zusätzlich eine indirekte Beeinflussung der Abgasrückführungsrate. Aufgrund dieser miteinander gekoppelten Wirkungen kann sich eine Verbesserung der Werte für die Schadstoffemission, die Motorleistung und den Kraftstoffverbrauch einstellen. Diese Ausgestaltung des Abgasturboladers ermöglicht eine Optimierung des Motorbetriebes über den gesamten Bereich von Motorbetriebszuständen hinsichtlich Kraftstoffverbrauch, Schadstoffemission und Motorleistung.

Aus der DE 43 20 045 A1 ist eine aufgeladene Brennkraftmaschine bekannt, die in der Ladeluftleitung einen Ladeluftkühler aufweist und bei der in der Abgasrückführungsleitung ein Abgaskühler vorgesehen ist.

Die US 5 406 796 zeigt eine aufgeladene Brennkraftmaschine, bei der die im Zusatzverdichter verdichteten Abgase durch eine Gasleitungsverbindung in die Ladeluftleitung eingeleitet werden, wobei in dieser Gasleitungsverbindung ein Rückschlagventil angeordnet ist, das in Richtung zur Ladeluftleitung durchströmbar ist.

Aus der DE 43 12 078 A1 ist ein weiterer Motor mit Abgasturbolader bekannt. Ausführungsformen von Varioturbinen sind beispielsweise in DE 33 22 436 A1, DE 43 03 521 C1 und in DE 43 30 487 C1 beschrieben.

Die vorliegende Erfindung beschäftigt sich mit dem Problem für einen Motor der eingangs genannten Art eine verbesserte Ausführungsform anzugeben, die insbesondere das Einsatzspektrum des Abgasturboladers erweitert.

Dieses Problem wird erfindungsgemäß durch einen Motor mit den Merkmalen des Anspruches 1 gelöst.

Durch die Ausstattung des Verbrennungsmotors mit einem Steuergerät, das ein Umschalten des Motorbetriebes zwischen einem Antriebsbetrieb und einem Bremsbetrieb ermöglicht, wobei außerdem der Abgasturbolader und das Steuergerät derart ausgebildet sind, dass das Steuergerät im Bremsbetrieb den Abgasturbolader zur Regulierung der Motorbremsleistung ansteuert bzw. betätigt, ergibt sich eine wertvolle Zusatzfunktion für den Abgasturbolader. Ein derartiger, zur Verstärkung der Motorbremse ausgebildeter Abgasturbolader wird dabei als Turbobremse bezeichnet.

Mit Hilfe des in der Abgasrückführungsleitung angeordneten ersten Stellgliedes, mit dem der durch die Abgasrückführungsleitung zurückgeführte Anteil des Abgases steuerbar ist, kann für den Motorbremsbetrieb die Rückführung der Gase, d.h. in diesem Fall der komprimierten Luft, vollständig von der Turbobremse entkoppelt werden, indem das Stellglied die Abgasrückführungsleitung schließt. Außerdem kann in bestimmten Betriebspunkten des Motors bzw. der Turbine die Wirkung der Turbobremse mit Hilfe der Rückführung der vom Motor komprimierten Luft verbessert werden, wenn in diesen Betriebspunkten das Stellglied, insbesondere in Abhängigkeit der Drehzahl des Motors und vorzugsweise kontinuierlich, geöffnet wird. Während bei herkömmlichen Turbobremsen in einem oberen Drehzahlbereich des Motors das Turbinenleitgitter geöffnet werden muß, um einerseits den Staudruck vor der Turbine und andererseits den Ladedruck nach dem Hauptverdichter in einer für die Erzielung einer maximalen Motorbremswirkung geeigneten Relation aufrechtzuerhalten und um Beschädigungen der Turbine zu vermeiden, können diese Wirkungen bei der Verwendung des erfindungsgemäßen Abgasturboladers auch dadurch erzielt werden, dass das Stellglied mit zunehmender Drehzahl zunehmend, insbesondere kontinuierlich, geöffnet wird.

Darüber hinaus kann die Leistungsfähigkeit der Turbobremse vor allem im unteren Drehzahlbereich des Motors zusätzlich verstärkt werden, indem bei entsprechender Ansteuerung des Stellgliedes über die Gasrückführung zusätzliche Masse dem Motor zugeführt wird. Durch diese Maßnahme, die durch entsprechende Steuersignale des Steuergerätes bewirkt werden kann, verstärkt sich die Kompressionsarbeit des Motors und somit dessen Bremswirkung in diesem wichtigen Drehzahlbereich. Die Variierung der zurückgeführten Gasmenge und deren Motoreintrittstemperatur läßt sich hinsichtlich einer maximalen Bremsleistung durch ein geeignetes Zusammenspiel der Turbinengitterverstellung und der Stellgliedverstellung steuern. Das Turbinenleitgitter wird hier im allgemeinen auf einen sehr engen Austrittsquerschnitt eingestellt. Außerdem kann ein gegebenenfalls in der Abgasrückführungsleitung angeordneter Abgaskühler deaktiviert werden, um die Temperatur der rückgeführten Gase zu erhöhen.

Mit dem in der Abgasrückführungsleitung angeordneten ersten Stellglied kann die Menge des in die Abgasrückführungsleitung einströmenden Abgases gesteuert werden, wodurch die Abgasrückführungsrate zusätzlich beeinflußt werden kann, um diese an die jeweiligen Betriebsbedingungen des Motors noch besser anpassen und erforderlichenfalls auch abstellen zu können.

Mit Hilfe des in der Abgasrückführungsleitung angeordneten zweiten Stellglieds ist die Abgasrückführungsleitung entweder an die Eingangsseite des Zusatzverdichters oder an die Gasleitungsverbindung zur Ladeluftleitung bzw. direkt an die Ladeluftleitung anschließbar. Mit diesem zweiten Stellglied ist es möglich, den rückzuführenden Abgasstrom am Zusatzverdichter vorbeizuleiten. Dies kann in solchen Betriebspunkten des Motorbetriebes bzw. der Turbine vorteilhaft sein, in denen sich vor der Turbine ein Aufstaudruck im Abgas aufbaut, der für diesen Betriebspunkt die optimale Abgasrückführungsrate gewährleistet.

Bei einer bevorzugten Ausführungsform des erfindungsgemäßen Motors kann eine Gasleitungsverbindung vorgesehen sein, mit der die im Zusatzverdichter verdichteten Abgase in eine Ladeluftleitung eingeleitet werden, mit der die im Hauptverdichter verdichtete Luft dem Motor zugeführt wird.

Bei einer Weiterbildung des Motors kann in der Ladeluftleitung ein Ladeluftkühler angeordnet sein, wobei dann die vom Zusatzverdichter kommende Gasleitungsverbindung nach diesem Ladeluftkühler und vor dem Motor an die Ladeluftleitung angeschlossen ist. Diese Maßnahme verhindert eine Verschmutzung des Ladeluftkühlers durch im Abgas transportierte Stoffe, z.B. Rußteilchen.

Weitere wichtige Merkmale und Vorteile des erfindungsgemäßen Turboladers ergeben sich aus den Unteransprüchen, aus der Zeichnung und aus der nachfolgenden Beschreibung eines bevorzugten Ausführungsbeispieles anhand der Zeichnung.

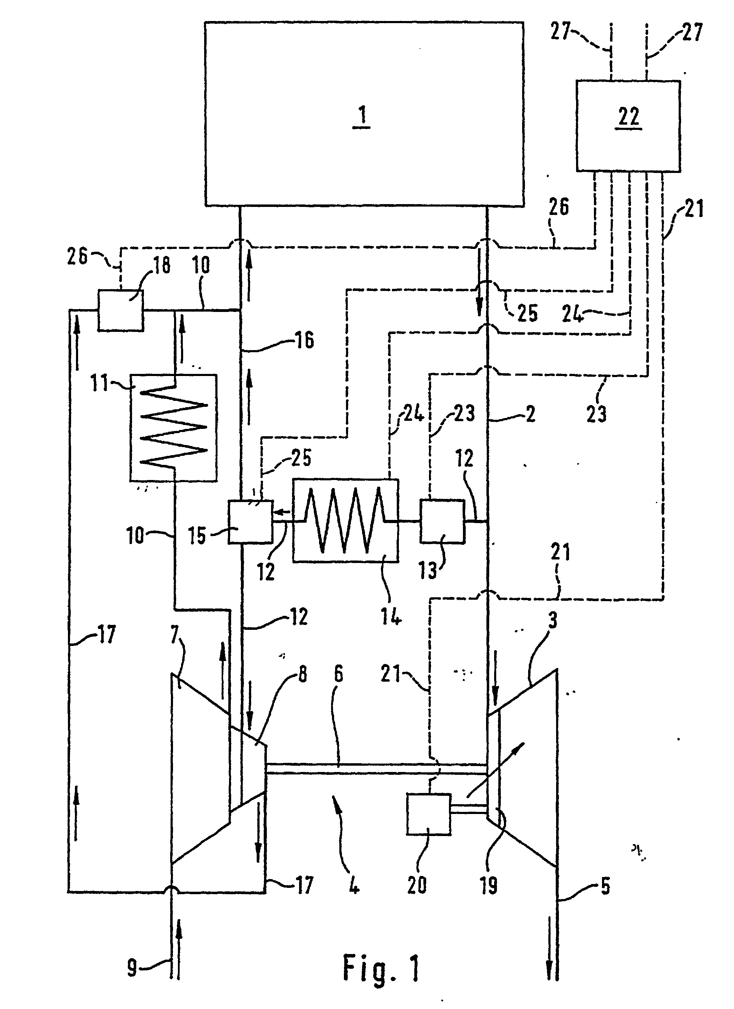

Die einzige Figur 1 zeigt eine schematische Prinzipdarstellung eines Verbrennungsmotors, der mit dem erfindungsgemäßen Abgasturbolader ausgestattet ist.

Entsprechend Fig. 1 weist ein Motor 1 mit interner Verbrennung eine Abgasleitung 2 auf, mit der die Abgase des Motors 1 nach der Verbrennung in eine Turbine 3 eines Abgasturboladers 4 nach der Erfindung eingeleitet werden. Die Abgase des Motors 1 dienen zum Antrieb der Turbine 3 des Abgasturboladers 4, wobei die in der Turbine 3 entspannten Abgase über eine Leitung 5 beispielsweise einer nicht dargestellten Abgasreinigungseinrichtung zugeführt werden.

Die Turbine 3 treibt eine Welle 6 an, auf der ein Hauptverdichter 7 sowie ein Zusatzverdichter 8 angeordnet sind. Der Hauptverdichter 7 dient zur Aufladung von über eine Frischluftleitung 9 angesaugter Frischluft auf einen bestimmten Ladedruck. Die aufgeladene (Lade)Luft wird über eine Ladeluftleitung 10 für die Verbrennung dem Motor 1 zugeführt. Zur Kühlung der aufgeladenen Luft ist in der Ladeluftleitung 10 ein Ladeluftkühler 11 angeordnet.

Zur Verbesserung der Schadstoffwerte in den Abgasen des Verbrennungsmotors 1 wird ein Teil der gebildeten Abgase erneut der Verbrennung zugeführt. Zu diesem Zweck ist an die Abgasleitung 2 eine Abgasrückführungsleitung 12 angeschlossen, mit der ein für die Abgasrückführung geeigneter Anteil der Abgase für die Verbrennung abgezweigt werden kann. In der Gasrückführungsleitung 12 ist ein erstes Stellglied 13 angeordnet, mit dem die Menge der rückzuführenden Abgase einstellbar bzw. steuerbar ist. Nach diesem Stellglied 13 ist in der Abgasrückführungsleitung 12 außerdem ein Abgas-Kühler 14 angeordnet, mit dem die rückzuführenden Abgase abgekühlt werden können. Nach dem Abgas-Kühler 14 ist in der Abgasrückführungsleitung 12 ein zweites Stellglied 15 angeordnet, das als Weiche ausgebildet ist und die rückzuführenden Abgase entweder über einen weiteren Abschnitt der Abgasrückführungsleitung 12 dem Zusatzverdichter 8 zugeführt oder in eine Bypaßleitung 16 einleitet, die vorzugsweise nach dem Ladeluftkühler 11 in der Ladeluftleitung 10 mündet.

Die Abgasrückführungsleitung 12 führt nach dem zweiten Stellglied 15 die darin transportierten Gase der Eingangsseite des Zusatzverdichters 8 zu. Die darin verdichteten Abgase verlassen den Zusatzverdichter 8 über eine Gasleitungsverbindung 17, die vorzugsweise nach dem Ladeluftkühler 11 in der Ladeluftleitung 10 mündet. In einem vom Zusatzverdichter 8 entfernten Abschnitt der Gasleitungsverbindung 17 ist ein als Rückschlagventil ausgebildetes drittes Stellglied 18 angeordnet.

Die Turbine 3 ist mit einem verstellbaren Leitgitter 19 ausgestattet, dessen Verstellbarkeit in Fig. 1 durch einen Pfeil symbolisiert ist. Für die Verstellung des Leitgitters 19 ist ein entsprechender Stellantrieb 20 vorgesehen, der über eine entsprechende Steuerleitung 21 an ein elektrisches oder elektronisches Steuergerät 22 angeschlossen ist. Ebenso wie die in Fig. 1 angedeuteten drehbaren Leitschaufeln des Leitgitters 19 können auch andere Varioelemente verwendet werden, mit denen in der Turbine das entsprechende Verhalten erzielbar ist.

Das Steuergerät 22 ist außerdem über entsprechende Steuerleitungen 23,24,25 und 26 mit dem ersten Stellglied 13, mit dem Abgas-Kühler 14, mit dem zweiten Stellglied 15 und mit dem dritten Stellglied 18 verbunden. Außerdem ist das Steuergerät 22 über Leitungen 27 mit einer nicht dargestellten Motorsteuerung verbunden, wodurch das Steuergerät 22 Informationen über den jeweils aktuellen Betriebszustand des Motors 1 (beispielsweise Motorlast, Motordrehzahl) erhält.

Das Steuergerät 22 bewirkt eine, insbesondere kennfeldmäßig gesteuerte, Abstimmung der Gasrückführung mit der Ladeluftaufladung in Abhängigkeit des aktuellen Motorbetriebszustandes. Auf diese Weise kann für jeden Betriebszustand des Motors 1 eine hinsichtlich günstiger Werte für die Schadstoffemission, den Kraftstoffverbrauch und die Motorleistung optimierte Abstimmung erzielt werden. Dabei beeinflußt das Steuergerät 22 die vorgenannten Werte im wesentlichen über das erste Stellglied 13 und den Stellantrieb 20.

Bei einer geeigneten Ausgestaltung des Abgasturboladers 4 kann dieser zur Verstärkung der Bremswirkung des Motors 1 in dessen Bremsbetrieb ausgenutzt, d.h. als Turbobremse verwendet werden. Die Wirkung einer derartigen Turbobremse kann durch die erfindungsgemäße Ausgestaltung des Abgasturboladers 4 verbessert werden. Eine solche Turbobremse ist zur Unterstützung der Bremswirkung des Motors 1 in Bereichen kleinerer bis mittlerer Drehzahlen des Motors 1 ausgelegt, da gerade in diesen Drehzahlbereichen eine Unterstützung der Bremswirkung des Motors 1 besonders erwünscht ist. Aufgrund dieser Voraussetzungen muß, um eine Beschädigung der Turbine 3 zu verhindern, in hohen Drehzahlbereichen des Motors 1 das Turbinenleitgitter 19 geöffnet werden. Eine solche Anpassung der Turbobremse an die Drehzahl des Motors 1 durch eine Verstellung des Turbinenleitgitters 19 kann in den genannten Betriebszuständen nur relativ grob durchgeführt werden. Während im normalen Turbobremsbetrieb das erste Stellglied 13 die Abgasrückführungsleitung 12 schließt, um den notwendigen Aufstau vor der Turbine 3 erzielen zu können, kann dieses Stellglied 13 bei hohen Drehzahlen des Motors 1 geöffnet werden. Die Öffnung des Stellgliedes 13 erfolgt dabei vorzugsweise proportional zur Zunahme der Drehzahl. Durch das Öffnen des Stellgliedes 13 kann die komprimierte' Luft durch die Abgasrückführungsleitung 12 abströmen, wodurch sich der Aufstaudruck vor der Turbine 3 regulieren läßt. Eine derartige Regulierung durch die Stellgliedverstellung kann sensibler durchgeführt werden als durch die vorgenannte Turbinenleitgitterverstellung, so daß die Anpassung der Turbobremse an den Motorbetrieb im oberen Drehzahlbereich des Motors 1 feiner durchgeführt werden kann.

Auch im Bereich niedriger Drehzahlen, in denen eine maximale Bremswirkung besonders wünschenswert ist, kann mit Hilfe des erfindungsgemäß ausgestalteten Abgasturboladers 4 dessen Wirkung als Turbobremse gesteigert werden. Durch das Öffnen des Stellgliedes 13 kann aufgrund der Kompression im Motor 1 höher komprimierte Luft dem Motor 1 zugeführt werden, wodurch die Kompressionsarbeit des Motors 1 erhöht und somit die Bremsleistung des Motors 1 verstärkt werden kann. Es ist selbstverständlich, daß dann der Abgas-Kühler 14 vom Steuergerät 22 über die Leitung 24 deaktiviert ist.

Das dritte Stellglied 18 ist vorzugsweise als Rückschlagsperrventil ausgebildet, um im Bremsbetrieb des Motors 1 eine Rückströmung der durch den Hauptverdichter 7 aufgeladenen Luft durch den Zusatzverdichter 8 zu vermeiden.

Das erste Stellglied 13 ist vorzugsweise als Überdruckregelventil ausgebildet, um im Bremsbetrieb des Motors 1, insbesondere bei hohen Drehzahlen, eine Beschädigung der Turbine 3 aufgrund eines zu hohen Aufstaudruckes in der durch den Bremsbetrieb des Motors 1 verdichteten Luft zu verhindern.

## Patentansprüche

1. Motor mit interner Verbrennung, umfassend:
- eine Abgasrückführungseinrichtung,
- ein Steuergerät (22) und
- einen Abgasturbolader (4) mit einem Hauptverdichter (7) zum Verdichten von dem Motor (1) zuzuführender Frischluft, mit einem Zusatzverdichter (8) zum Verdichten von dem Motor (1) rückzuführenden Verbrennungsabgasen, mit einer Turbine (3), die von den Abgasen des Motors (1) antreibbar ist und die zum Antrieb des Hauptverdichters (7) und des Zusatzverdichters (8) dient,
- wobei eine Abgasrückführungsleitung (12) die dem Motor (1) rückzuführenden Abgase dem Zusatzverdichter (8) zuleitet,
- wobei eine Ladeluftleitung (10) die im Hauptverdichter (7) verdichtete Luft dem Motor (1) zuführt,
- wobei die Turbine (3) eine verstellbare Geometrie aufweist,
**dadurch gekennzeichnet,**
- **dass** das Steuergerät (22) ein Umschalten des Motorbetriebes zwischen einem Antriebsbetrieb und einem Bremsbetrieb ermöglicht,
- **dass** der Abgasturbolader (4) und das Steuergerät (22) derart ausgebildet sind und zusammenwirken, dass das Steuergerät (22) im Bremsbetrieb den Abgasturbolader (4) zur Regulierung der Motorbremsleistung betätigt,
- **dass** in der Abgasrückführungsleitung (12) ein mit dem Steuergerät (22) verbundenes erstes Stellglied (13) angeordnet ist, durch das die Menge des in die Abgasrückführungsleitung (12) einströmenden Abgases steuerbar ist, wobei das Steuergerät (22) derart ausgebildet ist, dass es im Bremsbetrieb das Stellglied (13):
a) schließt, wenn sich die Drehzahl des Motors (1) in einem mittleren Drehzahlbereich befindet,
b) mit zunehmender Drehzahl zunehmend öffnet, wenn sich die Drehzahl der Motors (1) in einem hohen Drehzahlbereich befindet, und
c) mit abnehmender Drehzahl zunehmend öffnet, wenn sich die Drehzahl des Motors (1) in einem niedrigen Drehzahlbereich befindet,
- **dass** in der Abgasrückführungsleitung (12) ein zweites Stellglied (15) angeordnet ist, mit dem die Abgasrückführungsleitung (12) entweder an die Eingangsseite des Zusatzverdichters (8) oder an die Ladeluftleitung (10) anschließbar ist.

2. Motor nach Anspruch 1,
**dadurch gekennzeichnet,**
**dass** das Steuergerät (22) derart ausgebildet ist, dass es im Bremsbetrieb in einem niedrigen Drehzahlbereich des Motors (1) einen damit verbundenen, in der Abgasrückführungsleitung (12) angeordneten Abgaskühler (14) ausschaltet.

3. Motor nach Anspruch 1 oder 2,
**dadurch gekennzeichnet,**
**dass** die Turbine (3) ein verstellbares Leitgitter (19) oder drehbare Leitschaufeln (19) oder axial verschiebliche Leitgitterringe (19) oder Klappen im Turbineneintrittsbereich od.dgl. aufweist.

4. Motor nach einem der Ansprüche 1 bis 3,
**dadurch gekennzeichnet,**
**dass** eine Gasleitungsverbindung (17) vorgesehen ist, mit der die im Zusatzverdichter (8) verdichteten Abgase in die Ladeluftleitung (10) eingeleitet werden.

5. Motor nach Anspruch 4,
**dadurch gekennzeichnet,**
**dass** in der Ladeluftleitung (10) ein Ladeluftkühler (11) angeordnet ist, wobei die Gasleitungsverbindung (17) zwischen Ladeluftkühler (11) und Motor (1) an die Ladeluftleitung (10) angeschlossen ist.

6. Motor nach einem der Ansprüche 1 bis 5,
**dadurch gekennzeichnet,**
**dass** in der Abgasrückführungsleitung (12) ein weiteres Stellglied (13) angeordnet ist, mit dem die Menge des in die Abgasrückführungsleitung (12) einströmenden Abgases steuerbar ist.

7. Motor nach Anspruch 6,
**dadurch gekennzeichnet,**
**dass** das Stellglied (13) als Überdruckventil ausgebildet ist oder ein solches umfaßt.

8. Motor nach Anspruch 6 oder 7,
**dadurch gekennzeichnet,**
**dass** in der Abgasrückführungsleitung (12) ein Abgaskühler (14) vorgesehen ist.

9. Motor nach einem der Ansprüche 4 bis 8,
**dadurch gekennzeichnet,**
**dass** in der Gasleitungsverbindung (17) ein Rückschlagventil (18) od.dgl. angeordnet ist, das in Richtung zur Ladeluftleitung (10) durchströmbar ist.

10. Motor nach einem der vorhergehenden Ansprüche,
**dadurch gekennzeichnet,**
**dass** der Hauptverdichter (7), der Zusatzverdichter (8) und die Turbine (3) auf einer gemeinsamen Welle (6) angeordnet sind.

## Claims

1. Engine with internal combustion which comprises:
- an exhaust gas re-circulation device,
- a control device (22) and
- an exhaust gas turbocharger (4) with a main compressor (7) for compressing fresh air to be supplied to the engine, with an additional compressor (8) for compressing combustion exhaust gases to be re-circulated to the engine (1), with a turbine (3) which can be driven by the exhaust gases of the engine (1) and which serves to drive the main compressor (7) and the additional compressor (8),
- wherein an exhaust gas re-circulation pipe (12) which guides the exhaust gases to be re-circulated to the engine (1) to the additional compressor (8),
- wherein a charging air pipe (10) supplies the air compressed in the main compressor (7) to the engine (1),
- wherein the turbine (3) has adjustable geometry,
**characterised in that**
- the control device (22) facilitates a change-over of the engine operation between a driving operation and a braking operation,
- the exhaust gas turbocharger (4) and the control device are formed and work together in such a way that the control device (22) in braking operation activates the exhaust gas turbocharger (4) for the regulation of the engine braking power,
- in the exhaust gas re-circulation pipe (12) a first adjustable member (13) connected with the control device (22) is arranged, through which the quantity of the exhaust gas flowing into the exhaust gas re-circulation pipe (12) can be controlled wherein the control device (22) is formed in such a way that it affects the adjustable member (13) as follows in braking operation:
a) closes it when the speed of the engine (1) is in an average speed region,
b) increasingly opens it with increasing speed if the speed of the engine (1) is in a high speed region, and
c) increasingly opens it with falling speed if the speed of the engine (1) is in a low speed region,
- in the exhaust gas re-circulation pipe (12) a second adjustable member (15) is arranged, with which the exhaust gas re-circulation pipe (12) can be connected either to the input side of the additional compressor (8) or to the charging air pipe (10).

2. Engine according to claim 1
**characterised in that**
the control device (22) is formed in such a way that in braking operation in a low speed region of the engine (1) it switches off an exhaust gas cooler (14) connected with it and arranged in the exhaust gas re-circulation pipe (12).

3. Engine according to claim 1 or 2
**characterised in that**
the turbine has an adjustable guide grid (19) or rotatable guide vanes (19) or axially displaceable guide grid rings (19) or valves in the turbine input region or similar.

4. Engine according to one of the claims 1 to 3
**characterised in that**
a gas pipe connection (17) is provided, with which the exhaust gases compressed in the additional compressor (8) are guided into the charging air pipe (10).

5. Engine according to claim 4
**characterised in that**
in the charging air pipe (10) a charging air cooler (11) is arranged wherein the gas pipe connection (18) between the charging gas cooler (11) and the engine (1) is connected to the charging air pipe (10).

6. Engine according to one of the claims 1 to 5
**characterised in that**
in the exhaust gas re-circulation pipe (12) a further adjustable member (13) is arranged, with which the quantity of the exhaust gas flowing into the exhaust gas re-circulation pipe (12) can be controlled.

7. Engine according to claim 6
**characterised in that**
the adjustable member (13) is formed as a pressure relief valve or comprises one.

8. Engine according to claim 6 or 7
**characterised in that**
in the exhaust gas re-circulation pipe (12) an exhaust gas cooler (14) is provided.

9. Engine according to one of the claims 4 to 8
**characterised in that**
in the gas pipe connection (17) a non-return valve (18) or similar is arranged, through which media can flow in the direction of the charging air pipe (10).

10. Engine according to one of the preceding claims
**characterised in that**
the main compressor (7), the additional compressor (8) and the turbine (3) are arranged on a common shaft (6).

## Revendications

1. Moteur à combustion interne, comportant ;
- un dispositif de recirculation de gaz d'échappement,
- un appareil de commande (22), et
- un turbocompresseur à gaz d'échappement (4) comportant un compresseur principal (7) pour comprimer l'air frais à amener au moteur (1), un compresseur supplémentaire (8) pour comprimer des gaz de combustion à recirculer vers le moteur (1), une turbine (3) susceptible d'être entraînée par les gaz d'échappement du moteur (1) et qui sert à entraîner le compresseur principal (7) et le compresseur supplémentaire (8),
- dans lequel une conduite de recirculation de gaz d'échappement (12) amène au compresseur supplémentaire (8) les gaz d'échappement à recirculer vers le moteur (1),
- une conduite à air de charge (10) amène l'air comprimé dans le compresseur principal (7) au moteur (1),
- la turbine (3) présente une géométrie variable,
**caractérisé en ce que**
- l'appareil de commande (22) permet une inversion du fonctionnement moteur entre un fonctionnement propulseur et un fonctionnement de freinage,
- le turbocompresseur à gaz d'échappement (4) et l'appareil de commande (22) sont réalisés et coopèrent de telle sorte que l'appareil de commande (22) actionne en fonctionnement de freinage le turbocompresseur à gaz d'échappement (4) pour réguler la puissance du frein moteur,
- un premier organe de positionnement (13) est relié à l'appareil de commande (22) dans la conduite de recirculation de gaz d'échappement (12), au moyen duquel la quantité des gaz d'échappement rentrant dans la conduite de recirculation de gaz d'échappement (12) peut être commandée, l'appareil de commande (22) étant réalisé de telle sorte que pendant le fonctionnement de freinage
a) il ferme l'organe de positionnement (13) lorsque la vitesse de rotation du moteur (1) se situe dans une plage de vitesse de rotation moyenne,
b) il l'ouvre de plus en plus avec l'augmentation de la vitesse de rotation lorsque la vitesse de rotation du moteur (1) se situe dans une plage de vitesse de rotation élevée, et
c) il l'ouvre de plus en plus avec une baisse de la vitesse de rotation lorsque la vitesse de rotation du moteur (1) se situe dans une plage de vitesse de rotation basse,
- et **en ce que** dans la conduite de recirculation de gaz d'échappement (12) est agencé un deuxième organe de positionnement (15), au moyen duquel la conduite de recirculation de gaz d'échappement (12) est susceptible d'être branchée soit au côté entrée du compresseur supplémentaire (8) soit à la conduite à air de charge (10).

2. Moteur selon la revendication 1, **caractérisé en ce que** l'appareil de commande (22) est réalisé de telle sorte qu'en fonctionnement de freinage, dans une plage de vitesse de rotation basse du moteur (1), il met hors service un refroidisseur de gaz d'échappement (14) relié au moteur et agencé dans la conduite de recirculation de gaz d'échappement (12).

3. Moteur selon l'une ou l'autre des revendications 1 et 2, **caractérisé en ce que** la turbine (3) présente une grille directrice variable (19) ou des aubes directrices (19) mobiles en rotation ou des anneaux de grille directrice (19) axialement mobiles ou des clapets ou similaires dans la zone d'entrée de la turbine.

4. Moteur selon l'une des revendications 1 à 3, **caractérisé en ce qu'**il est prévu une liaison de conduite à gaz (17) au moyen de laquelle les gaz d'échappement comprimés dans le compresseur supplémentaire (8) sont introduits dans la conduite à air de charge (10).

5. Moteur selon la revendication 4, **caractérisé en ce qu'**un refroidisseur d'air de charge (11) est agencé dans la conduite à air de charge (10), la liaison de conduite à gaz (17) entre le refroidisseur d'air de charge (11) et le moteur (1) est branchée à la conduite à air de charge (10).

6. Moteur selon l'une des revendications 1 à 5, **caractérisé en ce qu'**un autre organe de positionnement (13) est agencé dans la conduite de recirculation de gaz d'échappement (12), organe au moyen duquel la quantité des gaz d'échappement rentrant dans la conduite de recirculation de gaz d'échappement (12) peut être commandée.

7. Moteur selon la revendication 6, **caractérisé en ce que** l'organe de positionnement (13) est réalisé sous forme de soupape de surpression ou bien il comprend une telle soupape.

8. Moteur selon l'une ou l'autre des revendications 6 et 7, **caractérisé en ce qu'**un refroidisseur de gaz d'échappement (14) est prévu dans la conduite de recirculation de gaz d'échappement (12).

9. Moteur selon l'une des revendications 4 à 8, **caractérisé en ce qu'**un clapet anti-retour (18) ou similaire est agencé dans la liaison de conduite à gaz (17), qui peut être traversé en direction de la conduite à air de charge (10).

10. Moteur selon l'une des revendications précédentes, **caractérisé en ce que** le compresseur principal (7), le compresseur supplémentaire (8) et la turbine (3) sont agencés sur un arbre commun (6).
